# EUROPEAN PATENT APPLICATION

(11) **EP 0 729 819 A1**
(43) Date of publication of application: **04.09.1996**
(21) Application number: 95108848.3
(22) Date of filing: 08.06.1995
(51) Int. Cl.: B29C 45/16

(54) **Multi-layer preform with piercing**

(30) Priority: 03.03.1995 EP 95103057
(71) Applicant: Schmalbach-Lubeca AG, D-38112 Braunschweig (DE)
(72) Inventor: Palmer, Peter, OAKFIELDS, Essex CO12 5JU (GB); Degrotte, Laurent, F-59670 Oxelaere (FR)
(74) Representative: Leonhard, Frank Reimund, Dipl.-Ing.

(57) **Abstract**

A PET-based multi-layer preform (1) is suggested, which was obtained in a process, in which the material (A) which was introduced prior to the material (B), is pierced in its front end (2,3). By varying the hight (or the position) of the piercing (h;j) the properties of the preform (1) and the container (10) may be varied and the amount and position of certain layers - not necessarily extending along the full preform - my be adjusted and predetermined.

## Description

The technical field of the invention are the plastics preforms for blow moulding to form a container and a method for manufacturing such a preform. Preforms in the meaning of this technical field and in the sense of the invention are at least partly multi-layered preforms, which contain two or more layers - preferably three layers - if regarded in a cross-section.

The multi-layered preform is after injection moulding handled in a separate process, in which it is blow-moulded to form a finished container, such as a bottle, containing said multi-layers in its body and base-forming section. Generally the threaded portion of the bottle, which is not affected by the blow-moulding process, does not contain a multi-layer structure.

The invention introduces piercing (claim 1) by which piercing the material introduced into the preform passes through the top-section of the material introduced prior to the piercing-material. The piercing-material therefore will reach the top part of the preform, such as the threaded portion, and leaves an inner and an outer layer of material (the pierced material) behind, which was introduced prior to the piercing material.

By using the method, a preform is obtained (claim 8), in which only partly along the surface of the preform there is a layer-structure. In a special embodiment the top portion of the preform contains the same material as the centre layer of the body forming portion. In this respect the injection area - opposite to the injection nozzle at the very bottom of the preform - is not regarded as being a part of the preform in which "the covering by the outer surface layer is interrupted" or is "only partly" (claim 8,12).

Multi-layer according to the suggestions of the invention should not be interpreted in the sense, that the full preform or the full bottle contains multi-layers along its hight, however it is meant that at least part of the bottle contains a three- or a five-layered structure.

The five-layered structure should be limited in the bottom region or slightly above the bottom region, to clear the injection nozzle from the material injected prior. This preform would be called a generally three layered preform (claim 11).

By adjusting the hight of the material to be pierced by the next material introduced into the mould, certain objectives can be solved or prepared to be solved in the obtained preform.

It is for example one idea to pierce to the prior injected material near the bottom. By this adjustment, the pierced layer is limited with only small dimension in the inner surface and on the outer surface in the bottom region of the preform except the area opposite the nozzle. If - in another embodiment - the piercing is performed near the threaded part or slightly below the ring, delimiting the threaded part from the shoulder region of the preform, a multi-layer structure is achieved almost along the whole preform, however not in the threaded portion. The threaded part then contains the same material as the centre-layer of the body portion.

Generally in prior art **piercing was avoided** and generally the material in the threaded part is the same as the material contained on the surface of the body-forming portion. This is due to the effect, that the first injected material is injected high enough, so that the second injected material would not be able to pierce through the top part of this layer, it merely pushed it further up the preform (see for example eP 367 123 by CPT or eP 161 625 by Mitsubishi).

If a high T_{g} material is used, it may be injected first or second (claim 5). It may strengthen the threaded portion if injected second; it may also strengthen certain parts of the container base forming section of the preform if injected first and only injected to an only small amount up the length of the preform, preferably according to claim 4, alternative (a).

Brief description of the figures, showing **embodiments** of the invention:

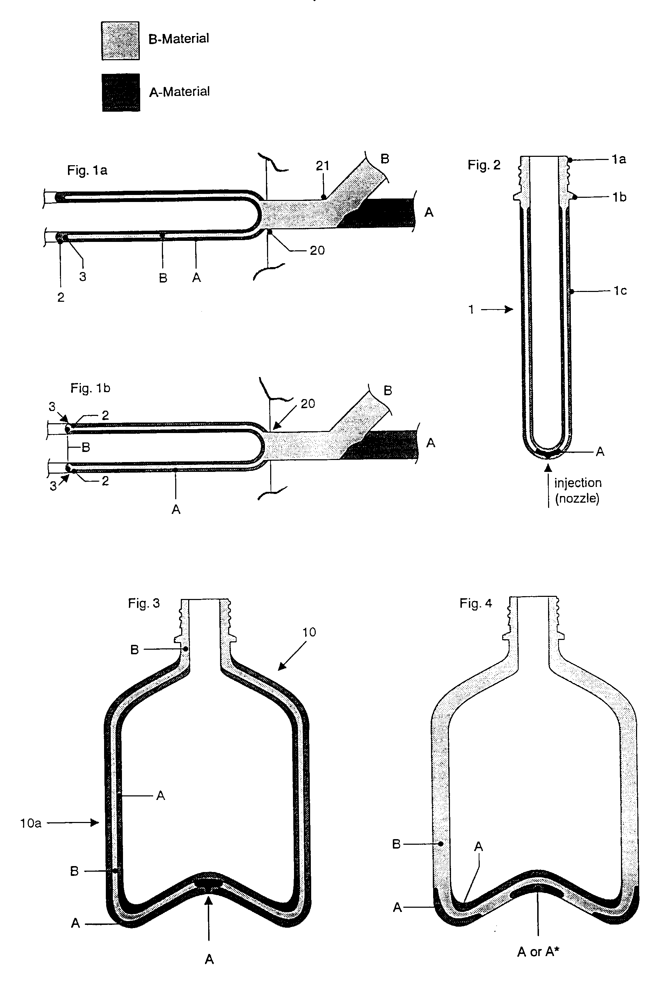

- **Figure 1a**: shows an injection process, by which a first material A is introduced and within said material A a second material B is introduced and rises through the inside of the first injected material. A nozzle 20 is used, to inject material A and B.
- **Figure 1b**: shows the piercing 3, when the material B introduced after or behind the material A pierces through the top region 2 of the first injected material. It is then pushed further up the preform to reach the threaded part, leaving the pierced material 2 behind.
- **Figur 2**: shows the preform 1, obtained from the process depicted in Figure 1b. It has surfaces at the inside and the outside, which reach from the bottom part to the lower end of the threaded part, however no outer layers in the threaded part 1a itself are obtained. In this region the inner material of the body forming portion of the preform is solely contained. Also the ring 1b is filled with material B.
- **Figure 3**: shows the blown container 10 after the blow-moulding process, when the preform of figure 2 is used. The threaded portion contains material B, which is the material of the centre layer of the body 10a. The bottom has inner and outer surfaces, containing material A, which was injected first.
- **Figur 4**: shows a sketch of a container, blow-moulded from a slightly altered preform, similar to that in figure 2. The centre of the base forming portion contains a third material A or A*, which was injected last, to clear the nozzle. This material may be a new material or it may be material A, to keep the nozzle in a condition, to properly start the next blow-moulding process. The amount of A-material in this embodiment is considerably less than the A-amount of figure 3. By this adjustment, the hight of the outside and inside A-layer is restricted to the base of the container.
- **Figur 5**: shows a similar sketch to figure 1, just introducing the piercing layer 3 into the pierced layer 2. The piercing layer 3 has not yet reached the top end of the prior injected material A.
- **Figur 6a Figur 6b**: show the preform and the bottle blow moulded therefrom. The bottle having a centre bottom material A*, to clear the nozzle, noticeable in figur 6a as A*-amount.

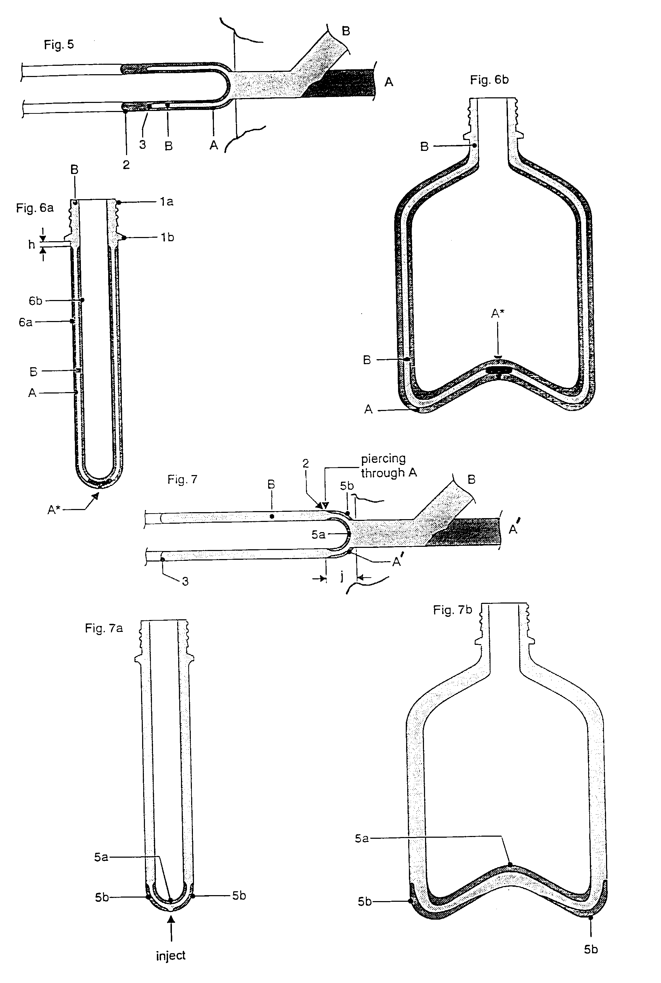

- **Figur 7 Figur 7a Figur 7b**: show in a different embodiment the piercing near the bottom. The distance j is shown, to depict up to which hight the prior injected material A was introduced into the preform, before the introducing of layer B was initiated and pierced through the low leveled first material A. By this method, the inside surface near the bottom or in the close bottom region and the outside surface only contain material A, being the pierced or prior material. This material may be selected to be of the kind A', for instance a higher modulus PET, giving more strength to the preform and the blown container in the bottom region.

The preform achieved from the process in figure 7 is depicted in **figure 7a**. The bottle, blown from the preform of figure 7a is shown with its layers 5a, 5b in the bottom region in **figure 7b**.

The distance h in figure 6a, being the distance of the front end of the prior injected material up to the threaded part la or the ring 1b, may be varied. It may be varied, to achieve a bottle, blown from the preform, to have different technical properties. The hight h may be even made as large, to compare to figure 7, giving the distance j to be left down to the injection point 20 of the preform.

In this respect j and h define the hight of the shoulder/body/base-forming-portion of the preform.

Using piercing, the outer layer forms an envelope and can be controlled in its extension. A predetermined position can be given to this outer layer and its hight and thickness may be varied according to the technical properties intended.

For instance material B may be a heat stable material, such as PET. Material A may be a Polyamid or Nylon to form a barrier layer up to the threaded portion. The base may contain an A* material, being e. g. a PET again. This example is shown in figures 6a, 6b.

If the barrier layer - which is the expensive layer - is restricted to the outside and inside surface, it can be kept thin and as a consequence less expensive material is used and the preform and bottle will be cheaper. The thickness necessary is given by the technical property "effective barrier".

A thin outside layer of low Acetaldehyd material restricting the generation or permeation of Acetaldehyd (AA), supports the low-cost-aspect. In a blown bottle, Acetaldehyd will not migrate into the contents of the bottle. Low Acetaldehyd material may be a conventional PET, having a low-AA-additive in it. It is more effective if selected thin, thinner than a barrier layer mentioned before.

By adjusting the piercing point between - at maximum - the ring and - at minimum - the base portion, the hight of the outer and the inside layers can be varied and adjusted. The inside layer is the one touching the contents of the blown bottle.

By varying and adjusting the hight of the layers, coloration of the bottle can be adjusted as well. If the prior injected material contains additives that cause non wanted colors, this discoloration can be contained or designed to be contained in an area, whose subsequent streching in the blown container is large to dispatch the colour.

Wanted colouring of the bottle may be effected by thin outer and inside layers, as thin as the low AA-layer. The threaded portion may still be made of a different colour e.g. a non-coloured PET.

A PET-based multi-layer preform (1) is suggested, which was obtained in a process, in which the material (A) which was introduced prior to the material (B), is pierced in its front end (2,3). By varying the hight (or the position) of the piercing (h;j) the properties of the preform (1) and the container (10) may be varied and the amount and position of certain layers - not necessarily extending along the full preform - my be adjusted and predetermined.

## Claims

1. Method of forming a multi-layered preform from two or more materials - at least two different materials - comprising:
(a) introducing or injecting a first material (A,A') into a mold for a preform;
(b) introducing a second material (B) from bottom to top, which pierces through (3) the top portion (2) of the first material (A), to reach the threaded part (la) of the preform (1), leaving the first injected material (A,A') behind.

2. Method according to claim 1, characterized in that,
(a) the position of "piercing through" is variable along the hight of the preform between a low level (j) and a high level (h) ;
(b) the position according to (a) is adjusted depending on the objectives (barrier properties, strength, colour, low AA-migration) to achieve with the blown container (10).

3. Method according to one of the preceeding claims comprising the step of:
(a) injecting a barrier layer material (A), such as Polyamid or PET, first, followed by a preferably heat stable material (B) such as Polycarbonate or PEN or PET, to pierce through the top (or front) end (2) of the first material (A) ; or
(b) injecting a material (A) with low Acetaldehyd delivery to be followed by a preferably heat stable material (B), such as Polycarbonate or PEN or PET, to pierce through the top (or front) end of the low-AA-material; or
(c) injecting a coloured material (A) first, such as PET with coloured additiv, to be followed by a second material (B).

4. Method according to anyone of the preceeding claims comprising the step of:
(a) piercing through the prior injected material at its front end near (j) the end of the bottom portion (5a,5b) of the preform; or
(b) piercing through the prior injected material at its front end near (h) the bottom end of the threaded portion (1a); or
(c) piercing through the prior injected material before or below the ring- or thread portion (1a,1b).

5. Method according to anyone of the preceeding claims, where the second (B) or the first (A') injected material is a higher modulus E material, having a higher T_{g} than PET (figure 6b, figure 7).

6. Method according to anyone of the preceeding claims comprising the step of introducing a third material - being the first (A) or a new material (A*) - at last, not piercing through the prior material (B).

7. Method according to anyone of the preceeding claims, whereby injecting or introducing material is preformed from the centre (20) of the bottom portion ("gate nub").

8. Preform having multi-layer-structure, for blowing in a blow-moulding process a container such as bottle, characterized in that the inside (5a) and/or outside (5b) layer ("surface layers") is only partly along the surface of the preform.

9. Preform according to claim 8 where the covering of surfaces is:
(a) in the bottom part on the outside and at the inside of the preform (Fig. 7) or
(b) below the threaded portion (1a,1b) at the inside and the outside (Fig. 6a).

10. Preform according to claim 8 or 9, the material (B) in the top portion - the threaded portion (1a) - being the same as in the centre layer of the body forming portion (1c), especially the upper part of the body forming portion (1c) of the preform.

11. Preform according to one of claims 8 to 10, being an injection moulded preform of generally three layer structure.

12. Preform according to anyone of claims 8 to 11, in which the partly covering by the outside surface layer (5b) does not comprise the close area of the preform opposite to the injection nozzle (20).
